# EUROPÄISCHE PATENTANMELDUNG

(11) **EP 2 873 460 A1**
(43) Veröffentlichungstag der Anmeldung: **20.05.2015**
(21) Anmeldenummer: 13005388.7
(22) Anmeldetag: 15.11.2013
(51) Int. Cl.: B01L 3/00, G02B 21/34, B01L 9/00, G01N 1/31, G06M 11/00, G02B 21/08, G01N 15/06

(54) **Bedienvorrichtung für eine Klappvorrichtung, Klappvorrichtung für diese Bedienvorrichtung und Verfahren zum Bedienen der Bedienvorrichtung**

(71) Anmelder: EPPENDORF AG, 22339 Hamburg (DE)
(72) Erfinder: Stranzinger, Martin, D-22339 Hamburg (DE)
(74) Vertreter: Ricker, Mathias

(57) **Zusammenfassung**

Die Erfindung bezieht sich auf eine Bedienvorrichtung für eine Klappvorrichtung, insbesondere für eine klappbare Zählkammereinrichtung für das optische Zählen von in einem Lösungsmittel suspendierten mikroskopischen Partikeln, insbesondere biologischen Zellen, eine Klappvorrichtung für diese Bedienvorrichtung und ein Verfahren zum Bedienen der Bedienvorrichtung. Die Klappvorrichtung wird über Kopplungselemente mithilfe der Bedienvorrichtung geschwenkt.

## Beschreibung

Die Erfindung bezieht sich auf eine Bedienvorrichtung für eine Klappvorrichtung, insbesondere für eine klappbare Zählkammereinrichtung für das optische Zählen von in einem Lösungsmittel suspendierten mikroskopischen Partikeln, insbesondere biologischen Zellen, eine Klappvorrichtung für diese Bedienvorrichtung und ein Verfahren zum Bedienen der Bedienvorrichtung.

Klappvorrichtungen werden insbesondere eingesetzt, um mehrfach verwendbare bzw. reinigungsfähige Zählkammereinrichtungen zu realisieren. Solche Zählkammereinrichtungen dienen dem Zählen von mikroskopischen Partikeln, also Partikeln, die mikroskopisch abbildbar sind und insbesondere üblicherweise unter der vergrößernden Abbildung eines optischen Mikroskops betrachtet werden. Solche Partikel weisen z.B. Durchmesser von 0,5 µm bis 100 µm auf. Eine häufige Aufgabe in biologischen oder biomedizinischen Laboren besteht darin, die Konzentration von Bakterien, Hefen, Algen oder Zellen zu ermitteln, die in einem Lösungsmittel suspendiert sind. Dazu werden oft Zählkammereinrichtungen verwendet, die manuell befüllt werden und ausgezählt werden. Eine verbreitete Zählkammereinrichtung ist die Neubauer-Zählkammer. Diese wird durch zwei transparente platten- bzw. plättchenförmige Teile gebildet, die übereinander gelegt werden und so ausgebildet sind, dass sich zwischen ihnen eine Zählkammer ausbildet. Bei dem ersten Teil handelt es sich um eine Glasplatte mit einer Grundfläche entsprechend der Größe eines Standard-Objektträgers, wie er in der optischen Mikroskopie verwendet wird. Diese Glasplatte weist zentral einen gegenüber der Oberseite z.B. um 0,1 mm vertieft angeordneten Zählkammerboden, kanalartige Strukturen und einen polierten Kontaktbereich in der Höhe der Oberseite auf. Zur Bildung der Zählkammer wird als zweites Teil ein poliertes Deckgläschen oberhalb des Zählkammerbodens vom Benutzer manuell positioniert und unter Ausübung eines leichten Drucks auf den Kontaktbereich aufgelegt, so dass das Deckgläschen stabil an dem Kontaktbereich haftet. Dies erkennt der Benutzer durch Newtonsche Interferenzfarben, die sich an den Kontaktstellen zwischen dem Deckgläschen und dem Kontaktbereich ausbilden. Durch die Begrenzungsflächen, die durch die Innenseite des Deckgläschens und dem Zählkammerboden gebildet werden, ist die Zählkammer definiert, die eine definierte Höhe aufweist. Zum Befüllen der Zählkammer wird die meist wässrige Partikelsuspension z.B. durch eine Pipette auf die kanalartigen Strukturen gegeben. Durch Kapillarkräfte wird dann die Flüssigkeit in die Zählkammer gezogen, die auf diese Weise vollständig gefüllt wird. Ein markierter Bereich der Zählkammer parallel zur Hauptebene mit vorbestimmter Größe, z.B. 0,25 mm², weist durch die vorgegebene Höhe der Zählkammer ein definiertes Volumen auf, so dass die Konzentration als Anzahl der Partikel pro Volumen des Lösungsmittels durch Zählen der Partikel in diesem Bereich unter dem optischen Mikroskop ermittelt werden kann.

Das bei diesem Verfahren als zweites Teil verwendete Deckgläschen ist zerbrechlich und muss manuell in einem vorbestimmten Bereich der das erste Teil bildenden Glasplatte positioniert und unter Druck darauf aufgebracht werden. Aus diesem Grund müssen die Deckgläschen häufig ersetzt werden, so dass sie als Verbrauchsartikel gelten. Zudem ist das bekannte Verfahren auch wegen der vielen einzelnen Handhabungsschritte aufwändig und fehleranfällig.

Aufgabe der vorliegenden Erfindung ist es, eine technische Lösung bereitzustellen, mit der das erstes Teil und das zweite Teil leichter positioniert und zueinander ausgerichtet werden können, so dass insbesondere das Zählen von mikroskopischen Partikeln effizienter ist.

Die Erfindung löst diese Aufgabe insbesondere durch die Bedienvorrichtung für eine Klappvorrichtung gemäß Anspruch 1, die Klappvorrichtung gemäß Anspruch 14 und das Verfahren gemäß Anspruch 15. Bevorzugte Ausgestaltungen sind insbesondere Gegenstände der Unteransprüche.

Die erfindungsgemäße Bedienvorrichtung dient der Durchführung einer Schwenkbewegung bei einer erfindungsgemäßen Klappvorrichtung, insbesondere einer Zählkammereinrichtung zum Zählen von mikroskopischen Partikeln, wobei die Klappvorrichtung ein erstes Teil (2; 52) und ein zweites Teil (3; 53) aufweist, die zur Durchführung der Schwenkbewegung R um eine Schwenkachse relativ zueinander bewegbar angeordnet sind, Die erfindungsgemäße Bedienvorrichtung weist auf: ein Lagerteil zum Lagern der Klappvorrichtung an der Bedienvorrichtung, ein Bedienteil, das zur Durchführung einer die Schwenkbewegung bewirkenden Bedienbewegung beweglich am Lagerteil angeordnet ist, mindestens ein erstes Kopplungselement, das mit mindestens einem bei der Klappvorrichtung vorgesehenen zweiten Kopplungselement koppelbar ist, um durch diese Kopplung die Schwenkbewegung zu bewirken.

Das Bedienteil ist vorzugsweise manuell bedienbar ausgestaltet. Insbesondere ist das Bedienteil dazu ausgebildet, dass die Bedienbewegung manuell angetrieben wird. Es ist aber auch möglich und bevorzugt, dass das Bedienteil automatisch bedient wird, insbesondere pneumatisch und/oder hydraulisch und/oder mittels einer Getriebeeinrichtung. Insbesondere kann das Bedienteil dazu ausgebildet sein, dass die Bedienbewegung motorisiert angetrieben wird, z.B. durch einen Elektromotor.

Die erfindungsgemäße technische Lösung, betreffend die erfindungsgemäße Bedienvorrichtung und die erfindungsgemäße Klappvorrichtung, bietet den Vorteil, dass das Positionieren eines ersten und zweiten Teils in verschiedenen Relativpositionen zueinander mithilfe der Bedienvorrichtung erfolgt. Für die präzise Positionierung des ersten und zweiten Teils in Relation zueinander ist einerseits dessen Ausführung als Klappvorrichtung vorteilhaft, da das erste und zweite Teil über die Schwenkachse präzise positionierbar und führbar sind. Andererseits ist die Bedienung der relativen Positionierung des ersten und zweiten Teils mithilfe der Bedienvorrichtung weiter vereinfacht, da der Benutzer zur besseren Bedienung ein geeignet ausgebildetes Bedienelement erhält, dessen Bedienbewegung über erste und zweite Kopplungselement mit der Schwenkbewegung der Klappvorrichtung gekoppelt ist. Wenn die Form der Klappvorrichtung durch ihre technische Hauptfunktion vorgegeben ist, indem sie z.B. als Zählkammereinrichtung mit insbesondere relativ geringer Größe ausgebildet ist, bietet die Erfindung die Möglichkeit, die Bedienung der Klappvorrichtung durch eine gewünschte Gestaltung der Bedienvorrichtung ergonomisch und effizient zu gestalten. Durch die Erfindung lässt sich eine Klappvorrichtung, insbesondere Zählkammereinrichtung, leichter handhaben, insbesondere Öffnen, Schließen, Befüllen, Reinigen, oder dem Lagerteil der Bedienvorrichtung entnehmen.

Es sind verschiedene Mechanismen denkbar, durch die eine vom Benutzer durchgeführte Bedienbewegung zu der gewünschten Schwenkbewegung der Klappvorrichtung führt. Besonders bevorzugt ist die Bedienbewegung eine translatorische Bewegung, die insbesondere über ein Koppelgetriebe die Schwenkbewegung bewirkt. Es ist aber auch bevorzugt, dass die Bedienbewegung auch eine schwenkende Bewegung ist, deren Schwenkachse insbesondere parallel zur Schwenkachse der an der Bedienvorrichtung angeordneten Klappvorrichtung liegen kann, die aber auch in einem Winkel zur Schwenkachse der an der Bedienvorrichtung angeordneten Klappvorrichtung liegen kann. Die Bedienbewegung kann auch eine gemischt translatorische und rotatorische Bewegung sein. In diesen Fällen wird vorzugsweise die Bedienbewegung und damit vorzugsweise die Schwenkbewegung vom Benutzer bewirkt, insbesondere durch die vom Benutzer manuell aufgebrachte Kraft angetrieben oder automatisch bewirkt.

Es ist auch denkbar, dass die Bedienvorrichtung so ausgebildet ist, dass die Bedienvorrichtung die Bedienbewegung startet, diese aber die Schwenkbewegung nicht antreibt. Dies kann zum Beispiel dadurch erreicht werden, dass die Bedienvorrichtung eine Federeinrichtung aufweist, deren im Spannungszustand gespeicherte Energie dazu genutzt wird, die Schwenkbewegung anzutreiben. Ebenso ist es möglich, dass die Klappvorrichtung eine Federeinrichtung aufweist, deren im Spannungszustand gespeicherte Energie dazu genutzt wird, die Schwenkbewegung anzutreiben. Die Entspannung der gespannten Federeinrichtung wird in beiden Fällen vorzugsweise durch die Durchführung der Bedienbewegung getriggert, indem das Bedienteil z.B. als Startknopf zum Starten der Bedienbewegung ausgeführt ist. Nachfolgend wird ausführlich eine Lösung in verschiedenen bevorzugten Ausgestaltungen beschrieben, bei der das Bedienteil eine Bedienbewegung durchführt, die vom Benutzer angetrieben wird.

Ferner ist auch denkbar, dass die Kraft, die zur Erzeugung des Drehmoments an der Klappvorrichtung führt, durch einen Antrieb aufgebracht wird, der vorzugsweise Bestandteil der Bedienvorrichtung ist, insbesondere durch einen elektrischen Antrieb. Die Bedienbewegung wäre in diesem Fall insbesondere eine solche Bedienbewegung, die den Antrieb startet.

Das Lagerteil weist vorzugsweise einen Aufnahmebereich zur Aufnahme des ersten Teils der Klappvorrichtung in einer Lagerposition auf. Der Aufnahmebereich ist vorzugsweise dazu ausgebildet, die Klappvorrichtung formschlüssig aufzunehmen, um diese eindeutig zu positionieren, vorzugsweise in seitlicher, also vorzugsweise in horizontaler Richtung, also senkrecht zur Gravitation. Beispielsweise kann die Klappvorrichtung in der ersten Relativposition des ersten und zweiten Teils eine im Wesentlichen quaderförmige Außenkontur aufweisen. Dann weist vorzugsweise der Aufnahmebereich eine Innenkontur auf, um diese Außenkontur formschlüssig aufzunehmen. Die Klappvorrichtung kann auch mindestens einen Vertiefungsabschnitt und/oder einen Vorsprungsabschnitt aufweisen, die zum Eingriff mit mindestens einem dazu komplementären, d.h. passenden Vorsprungsabschnitt und/oder Vertiefungsabschnitt des Basisteils kommen, wenn die Klappvorrichtung im Aufnahmebereich angeordnet wird. Auch durch solche Mittel kann die eindeutige Positionierung erreicht werden, vorzugsweise in seitlicher, also vorzugsweise in horizontaler Richtung. Dabei liegt die Klappvorrichtung vorzugsweise auf dem Lagerteil auf, wird also von diesem nach unten (also in Richtung der Gravitation) gehalten.

Vorzugsweise ist das erste Teil der Klappvorrichtung in der Lagerposition am Lagerteil fixiert gelagert mit Bezug auf die Kräfte und/oder Drehmomente, die bei der Durchführung der Schwenkbewegung und Bedienbewegung an der Klappvorrichtung wirken. Dadurch bleibt das erste Teil unbewegt, während das zweite Teil bei der Schwenkbewegung gegenüber dem ersten Teil geschwenkt wird.

Das Lagerteil kann z.B. ein plattenförmiges oder blockförmiges Bauteil sein, oder ein Rahmen oder ein Gestell. Das Lagerteil dient insbesondere als Basis für das Bedienteil. Das Bedienteil ist dazu ausgebildet, vom Benutzer bedient zu werden. Das Bedienteil weist vorzugsweise einen Grundkörper auf, der vorzugsweise als Griffelement gestaltet ist oder als Hebelelement oder als Bedienknopf.

Vorzugsweise ist das Bedienteil als Schiebeelement ausgebildet, insbesondere als Schlittenelement, das am Lagerteil beweglich gelagert ist, insbesondere durch eine vorzugsweise an der Bedienvorrichtung vorgesehene Führungseinrichtung geführt gelagert ist.

Vorzugsweise ist das mindestens eine erste Kopplungselement dazu ausgebildet, mit mindestens einem am zweiten Teil der Klappvorrichtung vorgesehenen, insbesondere befestigten oder vorzugsweise integral mit dem zweiten Teil ausgebildeten, zweiten Kopplungselement zusammenzuwirken, um die Schwenkbewegung zu bewirken. Das mindestens eine zweite Kopplungselement kann aber auch ein zur Klappvorrichtung und/oder zum Lagerteil separates Bauteil sein, das am zweiten Teil der Klappvorrichtung befestigt ist oder kann am ersten Teil angeordnet sein, wenn z.B. das erste Teil geschwenkt wird und das zweite Teil der Klappvorrichtung am Lagerteil gelagert wird.

Das mindestens eine erste Kopplungselement kann aus einer Gruppe von Kopplungselementen ausgewählt sein, die enthält: Rastelemente, insbesondere Rastvorsprünge, insbesondere Rastnocken, Raststifte, Rastzähne, Rastaufnahmen zur Aufnahme eines Rastvorsprungs; magnetische Elemente oder Magnete; Klammerelemente, Hakenelemente, Schlaufenelemente, Abschnitte des optionalen Übertragungsteils, insbesondere Kantenabschnitte. Das mindestens eine erste Kopplungselement kann als Bauteil mit der Bedienvorrichtung, insbesondere dem Übertragungsteil, verbunden sein oder integral mit dieser/diesem ausgeführt sein.

Vorzugsweise ist das Bedienteil für die Durchführung der die Schwenkbewegung bewirkenden Bedienbewegung von einer ersten Position, in der die Klappvorrichtung sich in einer ersten Schwenkposition befindet, zu einer zweiten Position bewegbar, in der die Klappvorrichtung sich in einer zweiten Schwenkposition befindet.

Eine Schwenkposition ist eine Relativposition des ersten und zweiten Teils der Klappvorrichtung. In einer 0°-Schwenkposition ist die Klappvorrichtung zugeklappt. Das erste und zweite Teil, die jeweils plattenförmig gestaltet sein können, sind dann parallel zueinander und einander insbesondere mit ihren Hauptseiten (siehe Beschreibung weiter unten) zumindest abschnittsweise kontaktierend angeordnet oder sind insbesondere übereinander angeordnet. Wenn nachfolgend eine erste Schwenkposition beschrieben wird, handelt es sich vorzugsweise um die 0°-Schwenkposition. In einer 90°-Schwenkposition ist die Klappvorrichtung im rechten Winkel aufgeklappt, das erste und zweite Teil, die jeweils plattenförmig gestaltet sein können, sind dann senkrecht zueinander und einander insbesondere mit ihren Hauptseiten senkrecht zueinander angeordnet. In der 90°-Position ist insbesondere die Innenseite des ersten und/oder zweiten Teils leicht zugänglich, z.B. zum Zwecke der Manipulation der Innenseite, z.B. zum Befüllen einer an der Innenseite -insbesondere des ersten Teils- vorzugsweise vorgesehenen Zählkammer oder Begrenzungsfläche einer Zählkammer, oder zum Zwecke der Reinigung dieser Innenseite bzw. Zählkammer oder Begrenzungsfläche. Wenn nachfolgend eine zweite Schwenkposition beschrieben wird, handelt es sich vorzugsweise um die 90°-Schwenkposition. In einer Schwenkposition zwischen 90° und 180° ist die Klappvorrichtung in einem stumpfen Winkel aufgeklappt. Wenn nachfolgend eine dritte Schwenkposition beschrieben wird, handelt es sich vorzugsweise um eine Schwenkposition zwischen 90° und 180°.

Die Bedienbewegung ist vorzugsweise eine translatorische Bewegung. Eine solche Bewegung ist intuitiv durchführbar und mit einfachen Mitteln zu bewirken. Vorzugsweise weist die Bedienvorrichtung eine Führungseinrichtung auf, mit der das Bedienteil am Lagerteil bei der Durchführung der translatorischen Bedienbewegung geführt wird.

Vorzugsweise weist die Führungseinrichtung einen sich entlang einer Geraden erstreckenden Führungsbereich auf, den das Bedienteil während der Bedienbewegung kontaktiert. Dadurch lässt sich das Bedienteil als Schiebeelement gestalten, das gegenüber dem Lagerteil verschiebbar ist. Das Bedienteil und/oder das Lagerteil kann mindestens eine Gleitfläche und/oder mindestens ein Rollelement und einen Führungsbereich, z.B. eine Schiene oder ein Stangenelement aufweisen, welche die reibungsarme Durchführung der Relativbewegung des Bedienteils am Lagerteil ermöglichen.

Vorzugsweise weist die Bedienvorrichtung mindestens ein Übertragungsteil auf. Vorzugsweise ist das mindestens eine erste Kopplungselement an dem mindestens einen Übertragungsteil angeordnet, insbesondere befestigt oder integral mit diesem ausgeführt.

Vorzugsweise ist das mindestens eine Übertragungsteil zur Durchführung einer Übertragungsbewegung beweglich an der Bedienvorrichtung, vorzugsweise am Bedienteil angeordnet, insbesondere damit verbunden.

Die Beschreibungen der bevorzugten Ausgestaltung des Übertragungsteils gelten für den Fall, dass nur ein einziges Übertragungsteil vorgesehen ist, können aber auch für zwei oder mehr Übertragungsteile gelten.

Vorzugsweise ist das Übertragungsteil stangenförmig gestaltet. Auf diese Weise kann das Übertragungsteil zwischen Bedienteil und der am Lagerteil anordenbaren Klappvorrichtung als Treibstange angeordnet werden, mit der die Schwenkbewegung angetrieben wird. Das stangenförmige Übertragungsteil ist vorzugsweise zumindest in der nullten und/oder dritten Position des Bedienelements vorzugsweise im Wesentlichen parallel der vorzugsweise translatorischen Richtung der Bedienbewegung angeordnet.

Vorzugsweise ist durch das mindestens eine Übertragungsteil die Bedienbewegung des Bedienteils zur Durchführung der Schwenkbewegung auf das mindestens eine zweite Kopplungsmittel der Klappvorrichtung übertragbar.

Vorzugsweise ist das mindestens eine Übertragungsteil parallel der translatorischen Bedienbewegung translatorisch beweglich und parallel der Schwenkachse der Klappvorrichtung schwenkbar am Bedienteil angeordnet.

Vorzugsweise weist das Übertragungsteil ein Langloch, insbesondere mit linearem Verlauf, auf, in dem ein Lagerelement, insbesondere ein Lagerstift, anordenbar ist. Vorzugsweise ist das Übertragungsteil dazu ausgebildet, translativ entlang des Langlochs am Lagerelement angeordnet zu sein und vorzugsweise zur Durchführung einer Schwenkbewegung in einem vorbestimmten Winkelbereich schwenkbar am Lagerelement angeordnet zu sein. Das Lagerelement ist vorzugsweise am Bedienteil angeordnet, insbesondere befestigt oder integral mit diesem ausgebildet. Das Lagerelement erlaubt vorzugsweise ein Schwenken des Übertragungsteils um eine Achse parallel zur Schwenkachse der Klappvorrichtung. Die Schwenkbarkeit desmindestens einen- Übertragungsteils am Lagerelement ermöglicht es, dass das Übertragungsteil der Schwenkbewegung folgt, wenn diese durch die ersten und zweiten Kopplungselemente übertragen wird. Das Langloch ermöglicht es ferner vorzugsweise, Distanzunterschiede auszugleichen, die bei der Kopplung einer vorzugsweise translatorischen Bedienbewegung und der Schwenkbewegung auftreten, wenn das Übertragungsteil während der Kopplung sowohl mit dem Bedienteil als auch mit vorzugsweise dem zweiten Teil der Klappvorrichtung verbunden ist.

Vorzugsweise ist das Bedienteil am Lagerteil verschiebbar angeordnet, vorzugsweise um der Reihe nach mindestens zwei der nachfolgend genannten Positionen oder vorzugsweise mindestens alle der nachfolgend genannten Positionen zu durchfahren: eine optionale nullte Position, die insbesondere eine Beleuchtungsposition sein kann, und in der insbesondere das mindestens eine erste Kopplungselement und das mindestens eine zweite Kopplungselement nicht zusammenwirken. Eine erste Position, in der das mindestens eine erste Kopplungselement und das mindestens eine zweite Kopplungselement zusammenwirken, insbesondere beginnen zusammenzuwirken, wenn die erste Position ausgehend von der nullten Position angefahren wird, und in der sich die Klappvorrichtung in einer ersten Schwenkposition befindet, insbesondere einer zugeklappten Schwenkposition. Eine zweite Position, in der das mindestens eine erste Kopplungselement und das mindestens eine zweite Kopplungselement zusammenwirken, insbesondere noch weiter zusammenzuwirken, wenn die zweite Position ausgehend von der ersten Position angefahren wird, und in der sich die Klappvorrichtung in einer zweiten Schwenkposition befindet, insbesondere einer aufgeklappten Schwenkposition. Eine optionale dritte Position, in der das mindestens eine erste Kopplungselement und das mindestens eine zweite Kopplungselement nicht zusammenwirken, insbesondere entkoppelt werden, wenn die dritte Position ausgehend von der zweiten Position angefahren wird, und in der sich die Klappvorrichtung in einer dritten Schwenkposition befindet, insbesondere einer im stumpfen Winkel aufgeklappten Schwenkposition.

Vorzugsweise ist das Übertragungsteil in Richtung parallel der Schwenkachse der Klappvorrichtung unverrückbar am Bedienteil angeordnet. Die Bezugnahme auf die Klappvorrichtung im Rahmen der Beschreibung der Bedienvorrichtung und deren Teile bezieht sich im Rahmen der Beschreibung der Erfindung stets auf den Fall, dass die Klappvorrichtung bestimmungsgemäß am Lagerteil, bzw. in -oder an- dem dort optional vorgesehenen Aufnahmebereich angeordnet ist.

Vorzugsweise weist die Bedienvorrichtung eine Federeinrichtung auf, die vorzugsweise am Bedienteil angeordnet ist und die vorzugsweise bei Durchführung der Bedienbewegung von dem mindestens einen Übertragungsteil gespannt wird. Die Federeinrichtung kann mindestens ein Federelement aufweisen, vorzugsweise eine Schenkelfeder, vorzugsweise aus Metall. Die Federeinrichtung ist vorzugsweise in der zweiten Position des Bedienteils stärker gespannt als in der dritten Position. Durch die Federeinrichtung ist die Bedienvorrichtung komfortabler zu verwenden.

Vorzugsweise ist das mindestens eine Übertragungsteil in der ersten Position des Bedienteils in einer ersten Anordnung am Bedienteil angeordnet und in der zweiten Position des Bedienteils in einer zweiten Anordnung am Bedienteil angeordnet, wobei insbesondere die zweite Anordnung durch die Bedienbewegung, das Zusammenwirken des mindestens einen ersten und zweiten Kopplungselements, und die Schwenkbewegung herbeiführbar ist, und wobei insbesondere die Bedienvorrichtung eine Federeinrichtung aufweist, die bei Durchführung der Bedienbewegung gespannt wird, und die das mindestens eine Übertragungsteil im Falle des Entkoppelns des während der Übertragungsbewegung gekoppelten mindestens einen ersten und zweiten Kopplungselements in die erste Anordnung zurückstellt.

Vorzugsweise weist das mindestens eine Kopplungselement ein Krallenelement auf, durch welches bei Durchführung der Bedienbewegung das mindestens eine, als Vorsprungselement ausgeführte zweite Kopplungselement mitnehmbar ist und dadurch die Schwenkbewegung der Klappvorrichtung bewirkbar ist. Die Ausführung als Krallenelement erlaubt es, dass dieses ein Vorsprungselement zumindest zwischen der ersten und zweiten Position des Bedienteils zunächst einkoppelt und mitnimmt und von dem Vorsprungselement entkoppelt wird, wenn dieses bei einer vorbestimmten Schwenkposition der Klappvorrichtung eine vorbestimmte Entkopplungsstellung erreicht hat.

Vorzugsweise sind in der zweiten Position das mindestens eine erste Kopplungselement und das mindestens eine zweite Kopplungselement gekoppelt und werden vorzugsweise entkoppelt, wenn das Bedienteil von der zweiten Position in eine dritte Position bewegt wird, so dass die Klappvorrichtung der Bedienvorrichtung in der dritten Position entnommen werden kann.

Vorzugsweise weist das Bedienteil mindestens ein erstes Rastelement auf und das mindestens eine Übertragungsteil mindestens ein zweites Rastelement auf, wobei das mindestens eine erste und zweite Rastelement das mindestens eine Übertragungsteil in mindestens einer Rastposition am Bedienteil verrasten können. Vorzugsweise ist das erste Rastelement eine Rastaufnahme und das zweite Rastelement ein Rastvorsprung. Vorzugsweise ist die Bedienvorrichtung dazu ausgebildet, dass das mindestens eine erste und zweite Rastelement das mindestens eine Übertragungsteil in einer Rastposition am Bedienteil verrasten können, wenn das Bedienteil in der zweiten Position und die Klappvorrichtung in der zweiten Schwenkposition angeordnet ist, in der die Klappvorrichtung aufgeklappt ist. Durch das Verrasten wird insbesondere die zweite Schwenkposition gesichert, so dass ein sicheres Manipulieren an der Klappvorrichtung, insbesondere Befüllen oder Reinigen möglich ist.

Vorzugsweise weist die Bedienvorrichtung eine Beleuchtungseinrichtung auf, die zur Beleuchtung eines vorbestimmten Bereichs der Klappvorrichtung, insbesondere einer Zählkammer, angeordnet ist, wenn diese in einer Beleuchtungsposition am Lagerteil gelagert ist. Die Beleuchtungsposition ist insbesondere die nullte Position des Bedienteils. Wenn die Klappvorrichtung, vorzugsweise in ihrer ersten Schwenkposition, insbesondere der 0°-Position, in einer eindeutigen und vorbestimmten Lagerposition am Lagerteil gelagert ist, z.B. in dem optionalen Aufnahmebereich, dann lässt sich das Bedienteil in die vorbestimmte Position bewegen, insbesondere die nullte Position, so dass sich das Bedienteil gegenüber der Klappvorrichtung in der Beleuchtungsposition befindet.

Durch die Positionierung des Aufnahmebereichs gegenüber der Beleuchtungseinrichtung ist die Klappvorrichtung immer eindeutig gegenüber der Beleuchtungseinrichtung positioniert, wenn die Klappvorrichtung in Beleuchtungsposition angeordnet ist. Das ist besonders vorteilhaft für die Reproduzierbarkeit der Ergebnisse bei der bildverarbeitungsgestützten automatischen Partikelzählung bei einer als Zählkammereinrichtung ausgeführten Klappvorrichtung.

Vorzugsweise weist die Beleuchtungseinrichtung mindestens eine Lichtquelle auf, insbesondere eine LED, die in der Beleuchtungsposition gegenüberliegend dem mindestens einen vorbestimmten Bereich der Klappvorrichtung, insbesondere einem optischen Fenster und/oder der Zählkammer angeordnet ist und mit der in der Beleuchtungsposition dieser vorbestimmte Bereich beleuchtbar ist. Dadurch kann der vorbestimmte Bereich homogen ausgeleuchtet werden. Die LED emittiert vorzugsweise blaues Licht oder emittiert vorzugsweise Licht im Wellenlängenbereich von 465 nm- 495 nm. Die Beleuchtungseinrichtung emittiert vorzugsweise kollimiertes Licht senkrecht auf die Hauptseite der vorzugsweise plattenförmig ausgebildeten Klappvorrichtung.

Die Erfindung betrifft ferner eine Klappvorrichtung, insbesondere eine Zählkammereinrichtung zum Zählen von mikroskopischen Partikeln, insbesondere biologischen Zellen, aufweisend ein erstes Teil und ein zweites Teil, die zur Durchführung einer Schwenkbewegung R um eine Schwenkachse relativ zueinander bewegbar angeordnet sind, insbesondere miteinander verbunden sind oder verbindbar sind, und mindestens ein zweites Kopplungselement, das zur Wechselwirkung mit dem mindestens einen ersten Kopplungselement einer erfindungsgemäßen Bedienvorrichtung und deren möglichen Ausgestaltungen ausgebildet ist, wobei die Klappvorrichtung zur Lagerung am Lagerteil der Bedienvorrichtung ausgebildet ist, wobei die Klappvorrichtung dazu ausgebildet ist, dass das mindestens eine zweite Kopplungselement mit dem mindestens einen ersten Kopplungselement der Bedienvorrichtung zusammenwirkt, wenn die Klappvorrichtung am Lagerteil gelagert ist, so dass durch diese Kopplung eine Bedienbewegung des Bedienteils der Bedienvorrichtung die Schwenkbewegung bewirkt.

Das mindestens eine zweite Kopplungselement ist dazu ausgebildet, mit dem mindestens einen ersten Kopplungselement der Bedienvorrichtung zusammenzuwirken, um durch diese Kopplung, insbesondere durch die Bedienbewegung, die Schwenkbewegung zu bewirken. Dabei wird über das mindestens eine zweite Kopplungselement ein Drehmoment an der Klappvorrichtung erzeugt, das zu der Schwenkbewegung führt. Die Kraft, die zu diesem Drehmoment führt, wird vorzugsweise vom Benutzer aufgebracht. Der Benutzer bedient zum Herbeiführen der gewünschten Schwenkposition der Klappvorrichtung die Klappvorrichtung nicht unmittelbar, insbesondere muss er die Klappvorrichtung zu diesem Zweck nicht berühren oder manipulieren, sondern die Bedienvorrichtung erfüllt diesen Zweck über die genannten Kopplungselemente.

Das mindestens eine zweite Kopplungselement kann aus einer Gruppe von Kopplungselementen ausgewählt sein, die enthält: Rastelemente, insbesondere Rastvorsprünge, insbesondere Rastnocken, Raststifte, Rastzähne, Rastaufnahmen zur Aufnahme eines Rastvorsprungs; magnetische Elemente oder Magnete; Klammerelemente, Hakenelemente, Schlaufenelemente, Abschnitte des zweiten Teils oder des ersten Teils, insbesondere Kantenabschnitte. Das mindestens eine zweite Kopplungselement kann als Bauteil mit der Klappvorrichtung, insbesondere dem zweiten Teil, verbunden sein oder integral mit dieser/diesem ausgeführt sein.

Vorzugsweise ist die Klappvorrichtung als Zählkammereinrichtung ausgebildet. Eine Zählkammereinrichtung für das optische Zählen von in einem Lösungsmittel suspendierten mikroskopischen Partikeln, insbesondere biologischen Zellen, weist auf: ein erstes Teil, das mindestens eine erste Begrenzungsfläche aufweist, ein zweites Teil, das mindestens eine zweite Begrenzungsfläche aufweist, eine Führungseinrichtung, durch die das erste und das zweite Teil zumindest in einer ersten Relativposition und einer zweiten Relativposition relativ zueinander positionierbar sind, wobei in der ersten Relativposition die mindestens eine erste und zweite Begrenzungsfläche dazu angeordnet sind, mindestens eine Zählkammer zu begrenzen, die zur Aufnahme des die Partikel enthaltenden Lösungsmittels dient, wobei mindestens eine der ersten und zweiten Begrenzungsflächen mindestens ein optisches Fenster der mindestens einen Zählkammer bildet, und die Zählkammereinrichtung dazu eingerichtet ist, dass die Partikel durch das mindestens eine optische Fenster mikroskopisch abbildbar sind. Mit Bezug auf die Zählkammereinrichtung entspricht der Begriff "Relativposition" dem Begriff "Schwenkposition".

Die Bezeichnung "mikroskopisch abbildbar" bezeichnet vorliegend die Eigenschaft der Zählkammereinrichtung, dass die gegebenenfalls in der Zählkammereinrichtung angeordneten mikroskopischen Partikel durch das mindestens eine optische Fenster der Zählkammereinrichtung hindurch in einem Bild abbildbar sind und somit das Zählen der Partikel durch Auswerten des Bildes erfolgen kann. Je nach Auflösung der optional vorgesehenen Bilderfassungseinrichtung und der optional vorgesehenen Abbildungseinrichtung kann ein geeigneter Abbildungsmaßstab verwendet werden, insbesondere ein Vergrößerungsmaßstab c, mit insbesondere 1 <= c <= 10, vorzugsweise 1 <= c <= 4.

Die Zählkammereinrichtung hat den Vorteil, dass die Positionierung des ersten und zweiten Teils, welche in der ersten Relativposition die Zählkammer bilden, durch die Führungseinrichtung erfolgt und dadurch vereinfacht ist. Eine Fehlpositionierung mit dem Resultat der Beschädigung der Zählkammerteile, wie mit Bezug auf die bekannte Neubauer-Zählkammer beschrieben, wird dadurch vermieden. Zudem wird bei wiederholter Verwendung ein und derselben Zählkammereinrichtung die erste Relativposition durch die Führungseinrichtung immer wieder in reproduzierbarer Weise mit hoher Präzision herbeigeführt. Die Präzision bei der Einstellung der ersten Relativposition ist wichtig, um die optische Abbildung eines Zählbereichs der Zählkammer durch das mindestens eine optische Fenster in reproduzierbarer Weise mit hoher Präzision durchzuführen. Das ist insbesondere dann wichtig, wenn die Zählkammereinrichtung bei einem automatisierten Verfahren zur Zählung der Partikel unter Verwendung einer elektronischen Bildverarbeitungseinrichtung erfolgen soll. Eine Kalibrierung muss dann gegebenenfalls seltener durchgeführt werden als im Fall einer herkömmlichen Zählkammereinrichtung, bei der immer wieder unterschiedliche Bestandteile der Zählkammereinrichtung eingesetzt werden.

Die relative Beweglichkeit des ersten und zweiten Teils ermöglicht das Herbeiführen der zweiten Relativposition, in der sich insbesondere die mindestens eine erste und zweite Begrenzungsfläche zumindest nicht vollständig gegenüberliegen, insbesondere nicht parallel gegenüberliegen. In der zweiten Relativposition sind diese Begrenzungsflächen insbesondere stärker der Umgebung exponiert als in der ersten Relativposition. Dadurch eignet sich die zweite Relativposition insbesondere, um die Zählkammereinrichtung in der zweiten Relativposition zu reinigen, insbesondere zu Sterilisieren, vorzugsweise durch Autoklavieren in einem Laborautoklaven.

Das erste Teil und das zweite Teil sind vorzugsweise unlösbar miteinander verbunden, d.h. insbesondere nicht ohne Beschädigung voneinander lösbar.

Es ist auch möglich und bevorzugt, dass das erste Teil und das zweite Teil miteinander beweglich verbindbar angeordnet sind, insbesondere indem eine dritte Relativposition des ersten Teils und des zweiten Teils vorgesehen ist, in der das erste Teil und das zweite Teil miteinander verbindbar sind und/oder voneinander lösbar sind. Zumindest in der ersten und/oder der zweiten Position sind das erste und das zweite Teil vorzugsweise miteinander verbunden und nicht lösbar.

Die Zählkammereinrichtung kann zusätzlich zu dem ersten Teil und dem zweiten Teil mindestens ein weiteres Teil aufweisen, insbesondere die Führungseinrichtung oder ein Bestandteil der Führungseinrichtung, oder eine Halteeinrichtung, mit der die Zählkammereinrichtung insbesondere in der ersten Relativposition und/oder der zweiten Relativposition und/oder mindestens einer weiteren Relativposition gehalten werden kann. Eine solche Halteeinrichtung kann aber auch durch eine geeignete Gestaltung des ersten und zweiten Teils realisiert sein, z.B. als Rasteinrichtung. Diese Rasteinrichtung kann dadurch realisiert sein, dass das erste und zweite Teil jeweils Rastelement aufweisen, z.B. Rastnocken und Rastaufnahmen für diese Rastnocken, um die Arretierung in der gewünschten Relativposition vorzusehen. Es ist auch möglich und bevorzugt, dass die Zählkammereinrichtung aus dem ersten und dem zweiten Teil besteht. Dadurch ist eine einfache Herstellbarkeit und Bedienbarkeit gewährleistet. Insbesondere in diesem Fall, aber auch generell vorzugsweise, ist die Führungseinrichtung durch eine geeignete Gestaltung des ersten und zweiten Teils realisiert.

Die Führungseinrichtung ist vorzugsweise dazu eingerichtet, die Relativbewegung des ersten und des zweiten Teils zu führen, wenn diese insbesondere zwischen der ersten und zweiten Relativposition bewegt werden. Diese Relativbewegung ist eine rotierende Bewegung, insbesondere eine schwenkende Bewegung. Die Führungseinrichtung ist als Schwenkeinrichtung, insbesondere als Scharniereinrichtung ausgebildet, um eine rotierende Relativbewegung zu ermöglichen. Vorzugsweise sind das erste und das zweite Teil geeignet ausgebildet, um die Schwenkeinrichtung zu bilden, so dass zur Bildung der Schwenkeinrichtung außer dem ersten und dem zweiten Teil vorzugsweise kein weiteres separates Bauteil erforderlich ist. Dazu weist die Zählkammereinrichtung vorzugsweise eine Schwenkstiftanordnung auf. Vorzugsweise weist zu deren Realisierung das erste und/oder das zweite Teil mindestens einen Schwenkstift auf, und das erste und/oder das zweite Teil weist mindestens eine Schwenkstiftaufnahme auf, wobei das Rotieren des Schwenkstiftes in einer Schwenkstiftaufnahme möglich ist.

Es ist auch möglich, dass die Zählkammereinrichtung außer dem ersten und dem zweiten Teil mindestens ein weiteres Bauteil aufweist, um die Schwenkeinrichtung zu realisieren, z.B. eine Schwenkachse, die durch geeignete Öffnungen oder Aussparungen des ersten und/oder zweiten Teils geführt ist. Die Schwenkeinrichtung kann auch ein Schwenkteil vorsehen, das ein Scharnierelement und zwei um das Scharnierelement schwenkbare Kopplungsabschnitte aufweist, die jeweils mit dem ersten und dem zweiten Teil verbunden sind oder verbindbar sind, damit diese um die Schwenkachse des Schwenkteils schwenkbar sind.

Eine Zählkammereinrichtung kann aus Kunststoff oder aus einem anderen Material für mehrfachen Gebrauch ausgeführt sein. Das erste und/oder das zweite Teil, insbesondere als Adapterteile, können über ein Filmscharnier einteilig gelenkig miteinander verbunden sein oder jeweils Gelenkteile haben, die miteinander zu einem Gelenk verbunden sind. Die Adapterteile können als Blenden zur Abschirmung der mindestens einen Zählkammer vor Umgebungslicht dienen. Hierfür können das erste und/oder das zweite Teil, insbesondere als Adapterteile, ganz oder teilweise aus eingefärbtem Kunststoff bestehen oder lichtundurchlässige Beschichtungen tragen. Beispielsweise weist die Zählkammereinrichtung ein erstes und/oder zweites Teil, insbesondere als Adapterteile, aus UV- undurchlässigem Kunststoff und/oder Einsätze aus UV-transparentem Kunststoff auf.

Gemäß einer Ausgestaltung sind Mittel zum lösbaren Verriegeln des ersten und/oder zweiten Teils in der ersten Relativposition vorhanden. Insbesondere, wenn das erste und/oder das zweite Teil Metall aufweisen, können diese Mittel eingebaute Magnete aufweisen. Insbesondere bei nicht-magnetischer Ausführung des ersten und/oder zweiten Teils können elastische Rasthaken vorhanden sein, die mit Rastkanten zusammenwirken. Die Rasthaken und Rastkanten können einteilig mit dem ersten und/oder zweiten Teil ausgebildet sein, insbesondere aus Kunststoff.

Vorzugsweise sind das erste Teil und/oder das zweite Teil im Wesentlichen plattenförmig ausgebildet, indem eine Platte jeweils in im Wesentlichen üblicher Gestaltung zwei gegenüberliegende Hauptseiten und mindestens eine Randseite oder, insbesondere im Falle einer im Wesentlichen quaderförmigen Platte, vier Randseiten aufweist. Vorzugsweise weist eine Hauptseite des plattenförmigen ersten und/oder plattenförmigen zweiten Teils die mindestens eine Begrenzungsfläche auf. Diese Begrenzungsfläche kann gegenüber der Hauptseite zumindest abschnittsweise oder vollständig vertieft angeordnet sein. Im Falle der planaren Gestaltung einer Begrenzungsfläche ist die Ebene der planaren Begrenzungsfläche vorzugsweise parallel zur Hauptseite und vorzugsweise innerhalb dieser Hauptseite liegend angeordnet.

Vorzugsweise ist mindestens eine der mindestens einen ersten und mindestens einen zweiten Begrenzungsfläche planar ausgebildet. Vorzugsweise sind mindestens eine erste planare Begrenzungsfläche und mindestens eine zweite planare Begrenzungsfläche zumindest in der ersten Relativposition planparallel angeordnet. Auf diese Weise lässt sich mindestens eine Zählkammer realisieren, deren planparallele Seiten ein Volumen definieren, das proportional zur Ausdehnung der Zählkammer in allen in der Ebene der Begrenzungsfläche gelegenen Richtungen ist. Jeder gedachte Schnitt mit einem Stempel mit konstanter Stempelflächengröße senkrecht durch die Begrenzungsflächen der Zählkammer schneidet aus der Zählkammer dasselbe Volumen heraus, was für den Einsatz der Zählkammereinrichtung sehr effizient ist.

Vorzugsweise ist die Zählkammereinrichtung dazu ausgebildet, dass mindestens eine erste und eine zweite Begrenzungsfläche in der ersten Relativposition planparallel angeordnet sind in einem vorbestimmten Abstand d1 gehalten werden. Vorzugsweise weist das erste Teil und/oder das zweite Teil mindestens ein Abstandselement auf, z.B. ein Sockelelement, das in der ersten Relativposition das erste und zweite Teil in diesem Abstand d1 halten. Vorzugsweise ist d1 aus einem der folgenden jeweils bevorzugten Bereichen ausgewählt: 0,001 mm <= d1 <= 0,01 mm; 0,01 mm <= d1 <= 0,10 mm; 0,1 mm <= d1 <= 1,0 mm. Diese Abstände eigenen sich besonders, um mikroskopische Partikel flächig anzuordnen, insbesondere biologische Zellen, Bakterien, Hefen, Pilze, die je nach Typ unterschiedliche Durchmesser haben können. Zellen, die mit Zählkammern gezählt werden, haben in der Regel Durchmesser zwischen 1 - 40 µm, während Oocyten wesentlich größer sein können.

Vorzugsweise ist die Zählkammereinrichtung dazu ausgebildet, dass mindestens eine erste und eine zweite Begrenzungsfläche, die jeweils insbesondere planar sein können, in der zweiten Relativposition in einem vorbestimmten Abstand d2 gehalten werden. Vorzugsweise befindet sich in der ersten Relativposition des ersten und zweiten Teils der Zählkammereinrichtung ein erster Punkt auf der mindestens einen ersten Begrenzungsfläche in einem vorbestimmten Abstand D von einem zweiten Punkt auf der mindestens einen zweiten Begrenzungsfläche, wobei in der ersten Relativposition D=d1, und wobei in einer zweiten Relativposition dieser Abstand D=d2 vorzugsweise größer ist als der Abstand D=d1 in der ersten Relativposition, also d2>d1. Durch den größeren Abstand d2 eignet sich die zweite Relativposition besonders, um die erste und zweite Begrenzungsfläche zu reinigen, insbesondere zu sterilisieren, insbesondere mittels eines Autoklaven.

Es kann auch mindestens eine Begrenzungsfläche der Zählkammer vorgesehen sein, die insbesondere nicht planar ist, die z.B. einen gekrümmten Verlauf aufweist.

Eine Begrenzungsfläche eines ersten oder zweiten Teils, welches als Plattenelement ausgeführt ist, kann gegenüber einer Hauptseite der Platte vertieft angeordnet sein. Die Hauptseite des ersten Teils, die in der ersten Relativposition der Hauptseite des zweiten Teils gegenüberliegt, heißt Innenseite des ersten Teils, ihre andere Seite heißt Außenseite des ersten Teils. Entsprechendes gilt für die Definition der Innenseite und Außenseite des zweiten Teils. In der ersten Relativposition kontaktieren sich vorzugsweise erste Kontaktbereiche des ersten Teils und zweite Kontaktbereiche des zweiten Teils. Dieser Kontakt sorgt dafür, dass die sich gegenüberliegenden mindestens eine erste und mindestens eine zweite Begrenzungsfläche in einem präzise definierten Abstand liegen. Falls das Material der Kontaktbereiche, oder des ersten oder zweiten Teils, ein Glas ist, ist bevorzugt, dass die Kontaktbereiche plangeschliffen und poliert sind. Auch im Fall von Kunststoff ist bevorzugt, dass die Kontaktbereiche eine geringe Rauheit aufweisen.

Es ist auch bevorzugt, dass das erste und das zweite Teil, insbesondere zumindest im Bereich der mindestens einen Zählkammer, identisch geformt sind. Dadurch können Zählungen in reproduzierbarer Weise unabhängig davon durchgeführt werden, ob die Beleuchtungseinrichtung und/oder die Abbildungseinrichtung dem ersten oder dem zweiten Teil zugewandt ist.

Das erste Teil kann auf der Innenseite eine Kanalstruktur aufweisen, welche die vorzugsweise zentral an der Innenseite angeordnete Zählkammer, oder die mindestens eine erste Begrenzungsfläche, mit dem Randbereich des ersten Teils verbindet. Zusätzlich oder alternativ kann das zweite Teil kann auf der Innenseite eine Kanalstruktur aufweisen, welche die vorzugsweise zentral an der Innenseite angeordnete Zählkammer, oder die mindestens eine zweite Begrenzungsfläche, mit dem Randbereich des zweiten Teils verbindet. Diese Kanalstruktur dient jeweils dazu, um das die mikroskopischen Partikel enthaltende Lösungsmittel mittels Kapillarkraft ausgehend vom Randbereich in die zentral gelegene Zählkammer zu transportieren. Es ist aber auch möglich und bevorzugt, dass eine andere Kanalstruktur oder keine Kanalstruktur vorgesehen ist. In letzterem Fall kann das die mikroskopischen Partikel enthaltende Lösungsmittel in einer zweiten Relativposition direkt auf die mindestens eine erste oder zweite Begrenzungsfläche aufgebracht werden, bevor die erste Relativposition herbeigeführt wird, in der das Lösungsmittel die Zählkammer füllt und überflüssiges Lösungsmittel aus der Zählkammereinrichtung herausgedrängt wird.

Die Zählkammereinrichtung kann mehrere Zählkammern aufweisen, und kann somit mehrere erste und/oder zweite Begrenzungsflächen aufweisen.

Das optische Fenster der Zählkammereinrichtung verbindet deren Innenvolumen optisch mit dem Außenraum um die Zählkammereinrichtung, um insbesondere einen Zählbereich optisch in den Außenraum abzubilden, z.B. auf eine Bilderfassungseinrichtung oder zur Beobachtung durch das Auge eines Benutzers. Das optische Fenster ist zumindest teilweise transparent, um diese Abbildung zu ermöglichen. Dies wird vorzugsweise dadurch erreicht, dass das Material, welches den Abschnitt des ersten und/oder zweiten Teils bildet, der zwischen Außenraum und der Begrenzungsfläche liegt, transparent ist, indem es z.B. aus einem Glas oder einem transparenten Kunststoff besteht.

Vorzugsweise weist die Zählkammereinrichtung eine erste Begrenzungsfläche und eine zweite Begrenzungsfläche auf, die jeweils ein optisches Fenster bilden und sich in der ersten Relativposition gegenüberliegen, so dass ein senkrecht durch das optische Fenster der ersten Begrenzungsfläche tretendes Licht auch durch das optische Fenster der zweiten Begrenzungsfläche treten kann, nachdem es die Zählkammer durchquert hat. Diese Konfiguration ist besonders bevorzugt, um den Zählbereich in einer Durchlichtanordnung abzubilden, bei der in der ersten Relativposition die Beleuchtungseinrichtung gegenüber der Außenfläche des die mindestens eine Zählkammer bildenden Abschnitts des ersten Teils angeordnet ist und die Abbildungseinrichtung gegenüber der Außenfläche des die mindestens eine Zählkammer bildenden Abschnitts des zweiten Teils angeordnet ist, oder umgekehrt.

Die Richtungsangabe "gegenüberliegend" bedeutet im Rahmen dieser Erfindung "senkrecht gegenüberliegend". Die Angabe "senkrecht zum ersten oder zweiten Teil" bezieht sich auf die erste Position und den Fall, dass das erste oder zweite Teil plattenartig ist, so dass die senkrechte Richtung die Richtung senkrecht auf eine Hauptseite der Platte bezeichnet. Im Falle einer planaren Begrenzungsfläche bedeutet die Angabe "senkrecht zum ersten oder zweiten Teil" vorzugsweise die Richtung senkrecht zur Begrenzungsfläche, in der ersten Relativposition.

Vorzugsweise sind die Zählkammereinrichtung und das mindestens eine optische Fenster so eingerichtet, dass durch mindestens ein optisches Fenster mindestens ein Zählbereich der Zählkammer in mindestens einem Bild mikroskopisch abbildbar ist, so dass das Zählen der in dem Bild gezeigten mikroskopischen Partikel ermöglicht wird. Dazu sind die mindestens eine erste oder zweite Begrenzungsfläche, sowie eine dieser Begrenzungsfläche jeweils gegenüberliegende Außenfläche des ersten oder zweiten Teils jeweils transparent, insbesondere zumindest -oder ausschließlich- im Bereich der Wellenlängen des Lichts, die für die Beleuchtung und/oder für die Abbildung verwendet werden.

Der Zählbereich ist vorzugsweise ein Raumbereich in der Zählkammer, der dazu geeignet ist, eine zu zählende Anzahl mikroskopischer Partikel aufzunehmen. Der Zählbereich ist insbesondere ein Ausschnitt dieser Zählkammer. Der Zählbereich weist vorzugsweise ein vorbestimmtes Volumen auf, das insbesondere bei planparallel gegenüberliegenden Begrenzungsflächen der Zählkammer durch das Produkt aus der parallel zu den Begrenzungsflächen gelegenen Fläche des Zählbereichs mit der Höhe des Zählbereichs gegeben ist, wobei die Höhe des Zählbereichs vorzugsweise dem Abstand der planparallelen Begrenzungsflächen in Richtung senkrecht zu diesen entspricht.

Vorzugsweise sind die Zählkammereinrichtung und die von der mindestens einen ersten und zweiten Begrenzungsfläche begrenzte mindestens eine Zählkammer dazu ausgebildet, in der ersten Relativposition ein Volumen V eines -insbesondere wässrigen-Lösungsmittels durch Kapillarkräfte zwischen der ersten und zweiten Begrenzungsfläche zu halten, wobei vorzugsweise 1,0 µl <= V <= 100 µl.

Vorzugsweise ist die Zählkammereinrichtung zu Sterilisierzwecken autoklavierbar ausgebildet. Dass bedeutet, dass die Zählkammereinrichtung aus einem oder mehreren Materialien besteht, das - jeweils - seine physikalischen Eigenschaften nicht ändert, wenn die Zählkammereinrichtung den Umgebungsbedingungen ausgesetzt wird, die üblicherweise beim Autoklavieren von Gegenständen in einem Laborautoklaven zum Sterilisieren dieser Gegenstände eingestellt werden. Solche Umgebungsbedingungen sind insbesondere die Kombination aus einer gesättigten Wasserdampfatmosphäre, einer Temperatur von bis zu 135°C, und einem Druck von bis zu 3,5 bar, über einen Zeitraum von bis zu 2 Stunden. Solche Bedingungen übersteht die Zählkammereinrichtung vorzugsweise beschädigungsfrei über ihre gesamte Produktlebenszeit, die insbesondere bis zu 500 oder 1000 solcher Sterilisationsvorgänge im Autoklaven vorsieht.

Die Zählkammereinrichtung ist beispielsweise aus Metall (z.B. Aluminium oder Edelstahl) und/oder aus einem oder mehreren Kunststoffen bzw. Hartkunststoffen (z.B. Polystyrol, PVC, Polypropylen, Polyethylen) hergestellt oder weist solche Materialien auf. Die Begrenzungsflächen oder die Abschnitte des ersten und/oder zweiten Teils, welche die Begrenzungsflächen aufweisen, sind z.B. aus optisch transparenten Kunststoffen (z.B. Topas oder Polystyrol), einem Glas, z.B. Quarzglas oder aus einem anderen optisch transparenten Glas (z.B. BK 7) hergestellt. Vorzugsweise besteht die Zählkammereinrichtung nur aus einem Material, oder nur aus zwei oder drei unterschiedlichen Materialien und/oder besteht vorzugsweise nur aus dem ersten und dem zweiten Teil.

Die Messflächen können auch alternativ so ausgestattet sein, z. B. durch entsprechende Oberflächengestaltung, dass mehrere Proben auf ihr angeordnet sein können. Die Proben können verschieden sein oder als identische Proben auf die Messfläche aufgebracht werden.

Die Erfindung betrifft ferner ein Verfahren zum Bedienen einer erfindungsgemäßen Klappvorrichtung, insbesondere Zählkammereinrichtung zum Zählen von mikroskopischen Partikeln, mittels der erfindungsgemäßen Bedienvorrichtung, aufweisend die Schritte: -Lagern der Klappvorrichtung am Lagerteil; - Anordnen des Bedienteils der Bedienvorrichtung in einer ersten Position; - Durchführen der Bedienbewegung von der ersten Position des Bedienteils zu einer zweiten Position des Bedienteils, während der durch das Zusammenwirken des mindestens einen ersten und zweiten Kopplungselements automatisch die Schwenkbewegung bewirkt wird; - vorzugsweise: Bewegen des Bedienteils von der zweiten Position zu einer dritten Position, wodurch das mindestens eine erste und zweite Kopplungselement entkoppelt werden, und vorzugsweise: Entnehmen der Klappvorrichtung aus der Bedienvorrichtung in der dritten Position.

Weitere mögliche bevorzugte Ausgestaltungen des erfindungsgemäßen Verfahrens lassen sich aus der Beschreibung der erfindungsgemäßen Bedienvorrichtung und Klappvorrichtung und von deren bevorzugten Ausgestaltungen ableiten.

Weitere bevorzugte Ausgestaltungen der erfindungsgemäßen Bedienvorrichtung, der erfindungsgemäßen Klappvorrichtung und des erfindungsgemäßen Verfahrens ergeben sich aus der nachfolgenden Beschreibung der Ausführungsbeispiele in Zusammenhang mit den Figuren und deren Beschreibung. Gleiche Bauteile der Ausführungsbeispiele werden im Wesentlichen durch gleiche Bezugszeichen gekennzeichnet, falls dies nicht anders beschrieben wird oder sich nicht anders aus dem Kontext ergibt. Es zeigen:
Fig. 1a zeigt ein erstes Ausführungsbeispiel der erfindungsgemäßen Klappvorrichtung, insbesondere Zählkammereinrichtung, in einer Seitenansicht, in der ersten Schwenkposition des relativ zueinander schwenkbaren ersten und zweiten Teils.
Fig. 1b zeigt das erste Ausführungsbeispiel der erfindungsgemäßen Klappvorrichtung in einer Seitenansicht, in der zweiten Schwenkposition.
Fig. 1c zeigt das erste Ausführungsbeispiel der erfindungsgemäßen Klappvorrichtung in einer Aufsicht, in einer weiteren Schwenkposition.
Fig. 2 zeigt ein Ausführungsbeispiel der erfindungsgemäßen Bedienvorrichtung, in der eine erfindungsgemäße Klappvorrichtung, insbesondere Zählkammereinrichtung, anordenbar ist, in Seitenansicht.
Fig. 3a zeigt in Seitenansicht ein Ausführungsbeispiel der erfindungsgemäßen Bedienvorrichtung, in der eine erfindungsgemäß gestaltete Klappvorrichtung gelagert ist, wobei sich die Bedienvorrichtung in einer Beleuchtungsposition befindet.
Fig. 3b zeigt eine perspektivische Ansicht der Darstellung aus Fig. 3a.
Fig. 4a zeigt in Seitenansicht einige Bestandteile der Bedienvorrichtung mit der Klappvorrichtung aus Fig. 3a mit einer Detaildarstellung X, wobei sich die Bedienvorrichtung in der ersten Position befindet.
Fig. 4b zeigt eine perspektivische Ansicht der Darstellung aus Fig. 4a mit einer Detaildarstellung Y.
Fig. 5a zeigt in Seitenansicht die Bedienvorrichtung mit der Klappvorrichtung aus Fig. 3a, wobei sich die Bedienvorrichtung in der zweiten Position befindet.
Fig. 5b zeigt eine perspektivische Ansicht der Darstellung aus Fig. 5a.
Fig. 6a zeigt in Seitenansicht die Bedienvorrichtung mit der Klappvorrichtung aus Fig. 3a, wobei sich die Bedienvorrichtung in der dritten Position befindet.
Fig. 6b zeigt eine perspektivische Ansicht der Darstellung aus Fig. 6a.
Fig. 7 zeigt ein Ausführungsbeispiel des erfindungsgemäßen Verfahrens.

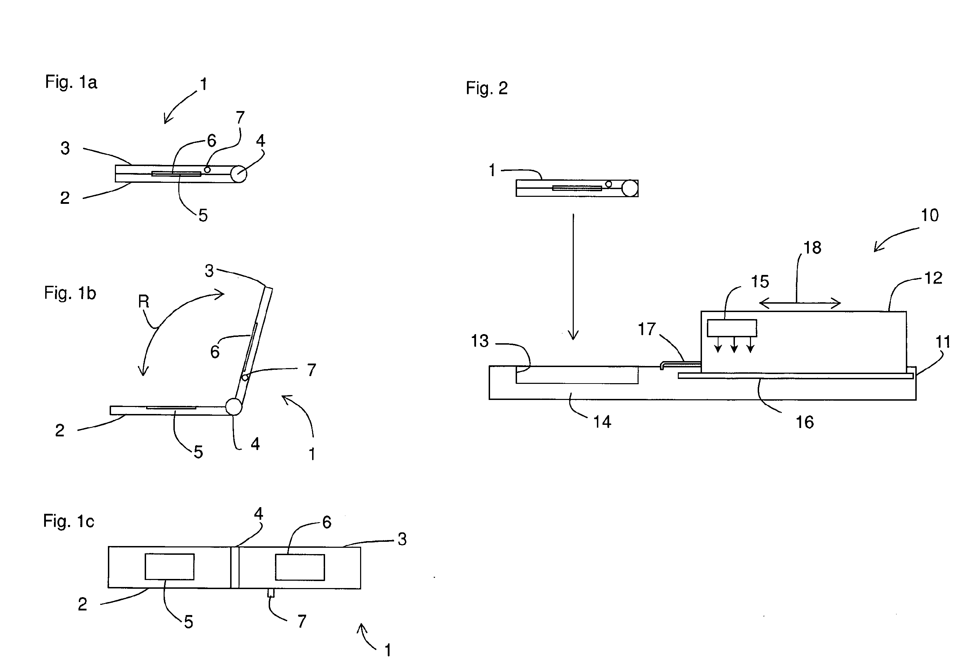

Fig. 1 a zeigt die als Zählkammereinrichtung 1 ausgeführte erfindungsgemäße Klappvorrichtung in einer Seitenansicht, in der ersten Schwenkposition des gegeneinander rotierbaren plattenförmigen ersten Teils 2 und des plattenförmigen zweiten Teils 3. Das erste Teil 2 weist einen zentralen Bereich 5 auf, der an der Innenseite des ersten Teils zentral vorgesehen ist und in dem mindestens eine erste Begrenzungsfläche angeordnet ist. Das zweite Teil 3 weist einen zentralen Bereich 6 auf, der an der Innenseite des zweiten Teils zentral vorgesehen ist und in dem mindestens eine zweite Begrenzungsfläche angeordnet ist. Die Zählkammereinrichtung 1 weist eine Führungseinrichtung 4 auf, die als Scharniereinrichtung 4 ausgeführt ist. Durch das Scharnier sind das erste Teil 2 und das zweite Teil 3 durch eine rotierende Relativbewegung R (siehe Fig. 1 b) gegeneinander bewegbar. Dadurch sind das erste Teil 2 und das zweite Teil 3 zwischen der in Fig. 1 a gezeigten ersten Schwenkposition und der in Fig. 1b gezeigten zweiten Schwenkposition rotierbar. In der ersten Schwenkposition liegen sich das erste Teil 2 und das zweite Teil 3 gegenüber und kontaktieren sich, indem das erste Teil und das zweite Teil mit ihren Hauptseiten übereinander liegend angeordnet sind. In der zweiten Schwenkposition sind das erste Teil 2 und das zweite Teil 3 um mehr als 90° gegeneinander geschwenkt, was auch bis zu 180° möglich ist, wie in Fig. 1c gezeigt ist. In einer solchen zweiten Schwenkposition können die zentralen Bereiche 5 und 6, die gemeinsam die Zählkammern ausbilden, effizient gereinigt werden, oder zu Sterilisierzwecken autoklaviert werden. Die Zählkammern dienen zur Aufnahme des die Partikel enthaltenden Lösungsmittels, die durch die flache Gestaltung der Zählkammern horizontal, also parallel zu den Hauptseiten des ersten und zweiten Teils in Fig. 1a verteilt werden. Das erste und zweite Teil sind zumindest in den zentralen Bereichen 5 und 6 transparent, wobei mindestens eine der ersten und zweiten Begrenzungsflächen (nicht gezeigt) mindestens ein optisches Fenster der mindestens einen Zählkammer bildet, und die Zählkammereinrichtung dazu eingerichtet ist, dass die Partikel durch das mindestens eine optische Fenster mikroskopisch abbildbar sind.

Das zweite Teil 3 der Klappvorrichtung weist einen Kopplungsstift 7 als "zweites Kopplungselement" auf, der dazu ausgebildet ist, mit dem zweiten Kopplungselement 17 der Bedienvorrichtung 10 (Fig. 2), einem Krallenelement, zusammenzuwirken, insbesondere erfasst und mitgenommen zu werden. Der Kopplungsstift 7 ist ein Vorsprung, der integral mit dem zweiten Teil 3 ausgebildet ist und der aus einer Randseite des plattenförmigen und quaderförmigen zweiten Teils 3 in Richtung parallel der Schwenkachse 4 hervorsteht. Das zweite Kopplungselement ist hier näher dem Rand des zweiten Teils angeordnet, an dem die Scharniereinrichtung 4 angeordnet ist, als an dem Rand, der dem Scharnier gegenüberliegt. Dadurch lässt sich die Schwenkbewegung durch die Translationsbewegung 18 (Fig. 2) einfacher realisieren.

Fig. 2 zeigt die Bedienvorrichtung 10 für das Schwenken von dem zur Durchführung einer Schwenkbewegung schwenkbar um eine Schwenkachse verbundenen ersten und zweiten Teil der Klappvorrichtung 1 aus Fig. 1a, insbesondere einer Zählkammereinrichtung zum Zählen von mikroskopischen Partikeln. Die Bedienvorrichtung weist ein manuell bedienbares Bedienteil 12 und ein Lagerteil 11 auf, an dem eine Führungseinrichtung 16 angeordnet ist, die eine translatorische Bedienbewegung entlang der Richtung des Doppelpfeils 18 des Bedienteils 12 ermöglicht und geführt wird. Das Lagerteil 11 weist einen Aufnahmebereich 14 auf, der zur formschlüssigen Aufnahme der Klappvorrichtung 1 aus Fig. 1 a gestaltet ist. Durch die Anordnung der Klappvorrichtung 1 in dem Aufnahmebereich 13 wird diese eindeutig auf dem Lagerteil in der Lagerposition positioniert. Der Aufnahmebereich ist dazu gestaltet, dass das erste Teil 2 der Klappvorrichtung 1 fixiert ist, wenn das zweite Teil 3 der Klappvorrichtung 1 in der Lagerposition geschwenkt wird, in einem Winkelbereich von vorzugsweise 0° bis 180°. Das Bedienteil 10 weist hier ferner eine Beleuchtungseinrichtung 15 auf, insbesondere eine LED mit einer Linseneinrichtung, mit der in der Beleuchtungsposition ein kollimiertes Licht in Richtung senkrecht auf die in Lagerposition angeordnete Klappvorrichtung, insbesondere auf deren zentrale Bereiche 5, 6 ausgestrahlt werden kann. Die Klappvorrichtung 1 ist im Bereich 5, 6 transparent. Auch die Bedienvorrichtung weist im Bereich 14 senkrecht unterhalb des Aufnahmebereichs ein optisches Fenster auf, indem dort entweder kein Material oder ein transparentes Material vorgesehen ist. Das optische Fenster erlaubt es, den Bereich 5, 6 der Klappvorrichtung, insbesondere der dort vorgesehenen Zählkammern mit dem Partikel aufweisenden Lösungsmittel in einer Durchlichtanordnung abzubilden, um mit einer Abbildungseinrichtung, insbesondere Linse und einer Bilderfassungseinrichtung, insbesondere Kamera, die senkrecht unterhalb des Bereichs 14 anordenbar sind, ein Abbild eines Zählbereichs der Zählkammer zu erfassen und dieses Bild mit elektronsicher Bildauswertung auszuwerten, um die im Bild erfassten Partikel zu zählen.

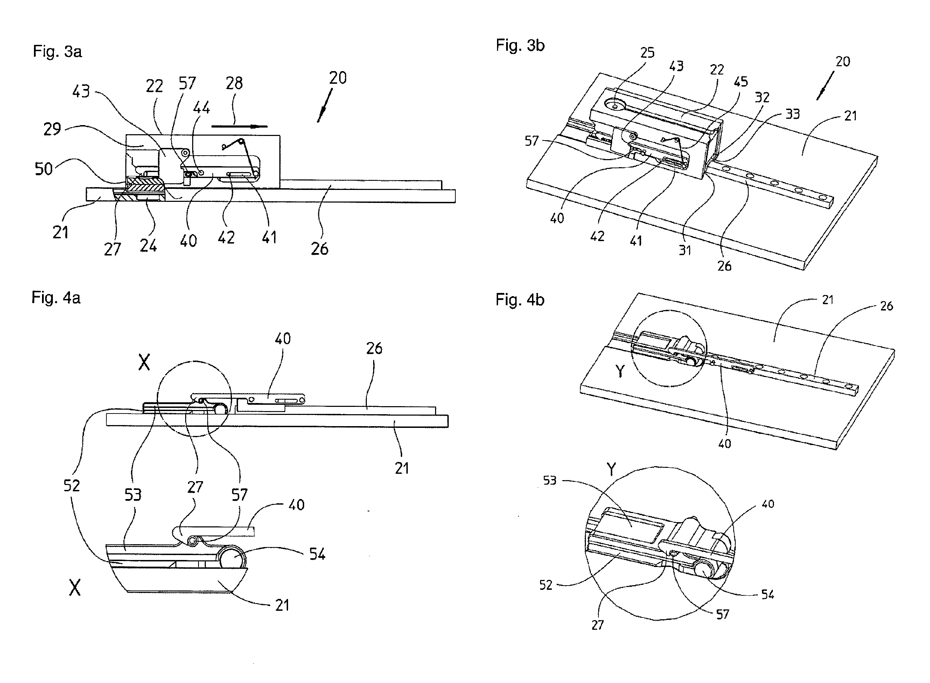

Die Bedienvorrichtung 10 kann insbesondere weiter so gestaltet sein, wie nachfolgend anhand der Figuren 3a bis 6b erläutert wird. Insbesondere kann das erste Kopplungselement 17 als Bestandteil eines Übertragungsteils ausgeführt sein.

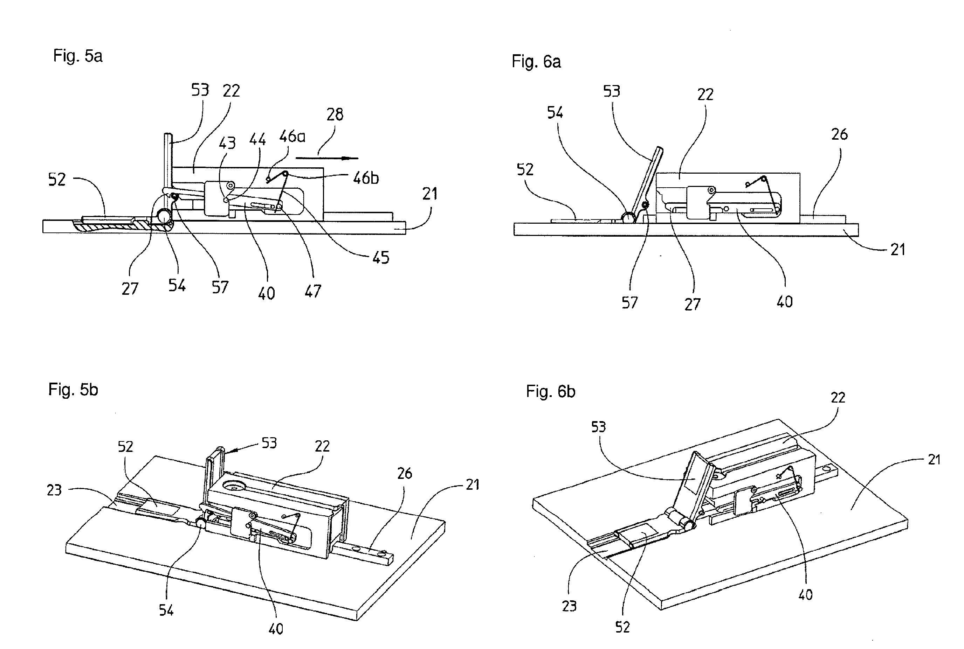

Fig. 3a zeigt die Bedienvorrichtung 20, die im Wesentlichen wie die die Bedienvorrichtung 10 aus Fig. 2 ausgestaltet ist. Anhand der Figuren 3a bis 6b wird insbesondere die Funktion des ersten Kopplungselements 27 und des zweiten Kopplungselements 57 beispielhaft erläutert wird. Die Bedienvorrichtung 20 befindet sich in der Beleuchtungsposition, in der die als Zählkammereinrichtung 50 ausgeführte Klappvorrichtung 50 in der Lagerposition am Lagerteil 21 der Bedienvorrichtung 20 gelagert ist und sich die als LED ausgeführte Beleuchtungseinrichtung 25 (siehe Fig. 3b) senkrecht oberhalb der des zentralen Bereichs 5, 6 befindet, der in der ersten Schwenkposition, hier der zugeklappten Schwenkposition, die Zählkammer mit den zu zählenden Partikeln befindet. In der Beleuchtungsposition strahlt die LED 25 mithilfe einer Linseneinrichtung (nicht gezeigt) ein kollimiertes Licht in Richtung einer Abbildungseinrichtung (nicht gezeigt) senkrecht nach unten, die unterhalb des zentralen Bereichs 55, 56 der Klappvorrichtung und unterhalb des materialfreien Bereichs 24 des Lagerteils 21 angeordnet werden kann. Die Beleuchtungseinrichtung 25 erlaubt die Abbildung eines Zählbereichs der Zählkammer, die durch die zentralen Bereiche 55, 56 des ersten Teils 52 und des zweiten Teils 53 der Zählkammereinrichtung 50 gebildet wird, in einer Durchlichtanordnung. Die Beleuchtungsposition wird als eine nullte Position bezeichnet, die der Ausgangspunkt für ein Öffnen der Zählkammereinrichtung mithilfe der Bedienvorrichtung ist. Das Öffnen der Zählkammereinrichtung erfolgt typischerweise nach der Durchführung eines Zählvorgangs, zum Befüllen der Zählkammern oder zum Reinigen der Zählkammern. Ausgehend von der nullten Position wird das Bedienteil vom Benutzer translatorisch entlang des Pfeils 18, geführt von der als Schieneneinrichtung realisierten Führungseinrichtung 26, nach rechts bewegt. Dabei werden unter anderem nacheinander die erste Position (siehe Fig. 4a, 4b), die zweite Position (siehe Fig. 5a, 5b), und die dritte Position (siehe Fig. 6a, 6b) der Bedienvorrichtung bzw. des Bedienteils angefahren.

Das Bedienteil 20 weist einen ersten Beinabschnitt 31 und hier auch einen zweiten Beinabschnitt 32 auf, die parallel der Führungseinrichtung 18 angeordnet sind. Beide Beinabschnitte 31, 32 sind durch einen ausgesparten Abschnitt 33 getrennt, der insbesondere zur Aufnahme des linearen Schienenelements der Führungseinrichtung 18 dient und durch den das Bedienteil im Inneren einen parallel zur Bedienbewegung 28 zentral gelegenen Hohlraum aufweist. Das Bedienteil 22 steht hier auf den Beinabschnitten 31, 32. Ferner ist der ausgesparte Abschnitt 33 dazu ausgebildet, die aus dem Aufnahmebereich 23 des Lagerteils 21 hervorstehende Zählkammereinrichtung 50 zumindest abschnittsweise in ihrer gesamten Länge oder eines Bruchteils dieser Länge aufzunehmen, so dass das Bedienteil oberhalb der in Lagerposition gelagerten Zählkammereinrichtung 50 beweglich ist, wenn sich diese in der zugeklappten Schwenkposition oder in einer zwischen 0° bis 90° aufgeklappten Schwenkposition befindet. Bei größeren Winkeln als 90° befindet sich das Bedienteil 22 neben der Zählkammereinrichtung 50.

Das Bedienteil 22 weist ein Übertragungsteil 40 auf, mit dem die Bedienbewegung 28 auf die Schwenkbewegung der Klappvorrichtung 50 und die vom Benutzer aufgebrachte Kraft zum Verschieben des Bedienteils teilweise als Drehmoment übertragen werden. Die Kopplung bei dieser Übertragung wird durch das als erstes Kopplungselement 27 ausgeführte Krallenelement 27 erzielt, das mit dem zweiten Kopplungselement 57 der Zählkammereinrichtung 50 zusammenwirkt, das als ein vom Krallenelement erfassbarer und mitnehmbarer Stift 57 ausgeführt ist. Die Anordnung des Stifts 57 am zweiten Teil 53 entspricht der Anordnung des Stifts 7 am zweiten Teil 3 (Fig. 1a). Das Krallenelement 27 ist an einem Endabschnitt des Übertragungsteils 40 angeordnet. Es weist eine nach unten gerichtete Kralle auf.

Das Übertragungsteil 40 ist ein sich linear erstreckendes und flaches, d.h. im Wesentlichen plattenförmiges, Teil, das an einer sich parallel zur Bedienbewegung erstreckenden Seite 29 des im Wesentlichen quaderförmig ausgebildeten Bedienteils 22 und parallel zu der Seite 29 angeordnet ist. Das Übertragungsteil 40 ist in der Beleuchtungsposition (Fig. 3a, 3b) parallel zur Bedienbewegung 28 angeordnet. Das Übertragungsteil 40 weist ein sich linear parallel zum Übertragungsteil erstreckendes Langloch 41 auf, das zur Aufnahme des Stifts 42 dient, der senkrecht zur Seite 29 aus dieser hervorsteht. Mithilfe dieses Langlochs ist das Übertragungsteil -in festgelegten Grenzen- sowohl rotatorisch als auch translatorisch am Bedienteil beweglich angeordnet bzw. montiert. Dadurch kann das Übertragungsteil der Schwenkbewegung des Stifts 57 folgen, wenn dieser vom Übertragungsteil ausgelenkt und durch die Scharniereinrichtung 54 entlang der Kreisbahn um die Schwenkachse der Zählkammereinrichtung 50 geführt wird.

Das Bedienteil weist ferner eine Rastaufnahme 43 auf, in der der am Übertragungsteil 40 in Richtung parallel zum Stift 42 des Bedienteils angeordnete Raststift 44 aufnehmbar und formschlüssig einrastbar ist.

Das Bedienteil 22 weist ferner eine Schenkelfeder 45 auf, die zwischen Bedienteil 22 und Übertragungsteil 40 eingespannt ist. Die Schenkelfeder 45 ist am Bedienteil befestigt, indem der erste Schenkel der Schenkelfeder an den Stiften 46a und 46b festgelegt ist, die an der Seite 29 des Bedienteils hervorstehen. Der andere Schenkel der Schenkelfeder 45 stützt sich am Stift 47 ab, der am Übertragungsteil angeordnet ist. Dadurch wird die Schenkelfeder gespannt, wenn das Übertragungsteil mit dem Bedienteil entlang der Bedienbewegung 28 vom Benutzer verschoben wird.

In Fig. 4a, 4b wurde das Bedienteil 22 entlang der Bedienbewegung 28 nach rechts verschoben bis zur hier gezeigten ersten Position, in der sich das erste Kopplungselement 27 und das zweite Kopplungselement 57 erstmals berühren, und die Kralle den Stift ergreift.

Durch die Kopplung wird im weiteren Verlauf der Bedienbewegung 28 das zweite Teil 53 gegenüber dem fixiert gelagerten Teil 52 geschwenkt, indem vom Übertragungsteil 40 ein Drehmoment auf das zweite Teil übertragen wird. Die vom Benutzer aufgebrachte Kraft wird teilweise auch dazu genutzt, die Feder 45 zu spannen. Das Schwenken erfolgt also gegen die Federkraft der Schenkelfeder 45. Durch die freie Aufhängung des Übertragungsteils 40 am Langloch 41 wird das Übertragungsteil zwischen der ersten und zweiten Position entgegen der Richtung des Pfeils 28 nach links gegenüber dem Bedienteil 22 verschoben, da das Krallenelement 27 dem Stift 57 folgt.

In Fig. 5a, 5b ist das Bedienteil in einer zweiten Position und das zweite Teil 53 in einer zweiten Schwenkposition angeordnet, in der es gegenüber dem horizontal angeordneten ersten Teil 52 um 90° aufgeklappt ist. Das Krallenelement 27 ist noch mit dem Stift 57 gekoppelt. Das Übertragungsteil ist in einer gegenüber der horizontalen Richtung geneigten Position, da es zwischen Stift 57 und Stift 42 angeordnet ist. Die zweite Position ist hier insofern abgesichert, dass der Stift 44 des Übertragungsteils in die Rastaufnahme 43 des Bedienteils verlagert wurde. Dadurch ist es insbesondere nicht möglich, dass das Übertragungsteil nach unten fällt. In dieser Position ist das zweite Teil 53 der Zählkammereinrichtung 50 in der zweiten Schwenkposition gesichert, so dass Maßnahmen an der Zählkammereinrichtung 50, insbesondere das Befüllen oder Reinigen der Zählkammer sicher durchgeführt werden können. Das Bedienteil 22 kann aber weiter in Richtung des Pfeils 28 nach rechts verschoben werden, wobei das erste und zweite Kopplungselement im Verlauf dieser weiteren Bewegung entkoppeln, indem die Kralle 27 über den Stift 57 gleitet, gezogen durch die Feder 45, und die dritte Position erreicht wird.

In Fig. 6a, 6b ist das Bedienteil in einer dritten Position und das zweite Teil 53 in einer Schwenkposition angeordnet, in der es gegenüber dem horizontal angeordneten ersten Teil 52 unter einem stumpfen Winkel von ca. 110° aufgeklappt ist. In dieser Position ist das Übertragungsteil 40 von der Federkraft der Schenkelfeder 45 wieder in die Ausgangsposition zurückgezogen worden, die Feder 45 hat dadurch die zwischen der ersten und der zweiten Position aufgebaute Spannung wieder verloren. In der dritten Position kann die Zählkammereinrichtung 50 dem Lagerteil 21 entnommen werden, z.B. um gereinigt oder in einem Autoklaviervorgang sterilisiert zu werden.

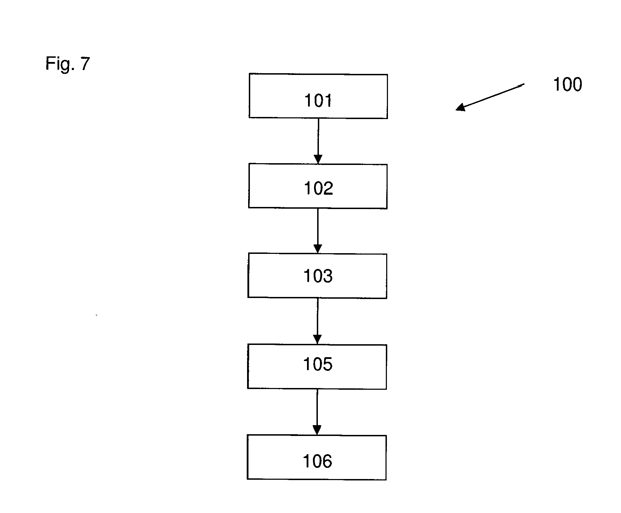

Fig. 7 zeigt das Verfahren 100 zum Bedienen einer erfindungsgemäßen Klappvorrichtung, insbesondere einer Zählkammereinrichtung zum Zählen von mikroskopischen Partikeln, insbesondere der Zählkammereinrichtung 1, 50 mittels der erfindungsgemäßen Bedienvorrichtung, insbesondere der Bedienvorrichtung 20, aufweisend die Schritte:
- Lagern der Klappvorrichtung am Lagerteil (101)
- Bewegen des Bedienteils in eine erste Position (102);
- Durchführen der Bedienbewegung von der ersten Position des Bedienteils zu einer zweiten Position des Bedienteils, während der durch das Zusammenwirken des mindestens einen ersten und zweiten Kopplungselements automatisch die Schwenkbewegung bewirkt wird (103);
- Bewegen des Bedienteils von der zweiten Position zu einer dritten Position, wodurch das mindestens eine erste und zweite Kopplungselement entkoppelt werden (104);
- Entnehmen der Klappvorrichtung aus der Bedienvorrichtung in der dritten Position (105).

## Patentansprüche

1. Bedienvorrichtung (10; 20) für die Durchführung einer Schwenkbewegung bei einer Klappvorrichtung (1; 50) gemäß Anspruch **14,** insbesondere einer Zählkammereinrichtung zum Zählen von mikroskopischen Partikeln, wobei die Klappvorrichtung ein erstes Teil (2; 52) und ein zweites Teil (3; 53) aufweist, die zur Durchführung der Schwenkbewegung R um eine Schwenkachse relativ zueinander bewegbar angeordnet sind" aufweisend
ein Lagerteil (11; 21) zum Lagern der Klappvorrichtung (1; 50) an der Bedienvorrichtung (10; 20),
ein Bedienteil (12; 22), das zur Durchführung einer die Schwenkbewegung bewirkenden Bedienbewegung (18; 28) beweglich am Lagerteil (11; 21) angeordnet ist,
mindestens ein erstes Kopplungselement (17; 27), das mit mindestens einem bei der Klappvorrichtung (1; 50) vorgesehenen zweiten Kopplungselement (7; 57) koppelbar ist, um durch diese Kopplung die Schwenkbewegung zu bewirken.

2. Bedienvorrichtung gemäß Anspruch 1, wobei das Lagerteil (11; 21) einen Aufnahmebereich (13; 23) zur Aufnahme des ersten Teils der Klappvorrichtung in einer Lagerposition aufweist und wobei das mindestens eine erste Kopplungselement dazu ausgebildet ist, mit mindestens einem am zweiten Teil der Klappvorrichtung vorgesehenen zweiten Kopplungselement zusammenzuwirken, um die Schwenkbewegung zu bewirken.

3. Bedienvorrichtung gemäß Anspruch 1 oder 2, wobei das Bedienteil durch die Durchführung der die Schwenkbewegung bewirkenden Bedienbewegung von einer ersten Position, in der die Klappvorrichtung sich in einer ersten Schwenkposition befindet, zu einer zweiten Position bewegbar ist, in der die Klappvorrichtung sich in einer zweiten Schwenkposition befindet.

4. Bedienvorrichtung gemäß Anspruch 3, wobei die Bedienbewegung eine translatorische Bewegung ist und die Bedienvorrichtung eine Führungseinrichtung (16; 26) aufweist, mit der das Bedienteil am Lagerteil bei der Durchführung der translatorischen Bedienbewegung geführt wird.

5. Bedienvorrichtung gemäß einem der vorherigen Ansprüche, die mindestens ein Übertragungsteil (40) aufweist, an dem das mindestens eine erste Kopplungselement angeordnet ist, wobei das mindestens eine Übertragungsteil zur Durchführung einer Übertragungsbewegung beweglich an der Bedienvorrichtung angeordnet ist und durch das mindestens eine Übertragungsteil die Bedienbewegung des Bedienteils zur Durchführung der Schwenkbewegung auf das mindestens eine zweite Kopplungselement der Klappvorrichtung übertragbar ist.

6. Bedienvorrichtung gemäß Anspruch 5, wobei das mindestens eine Übertragungsteil parallel der translatorischen Bedienbewegung translatorisch beweglich und parallel der Schwenkachse der Klappvorrichtung schwenkbar am Bedienteil angeordnet ist.

7. Bedienvorrichtung gemäß Anspruch 5 oder 6, die eine Federeinrichtung aufweist, die bei Durchführung der Bedienbewegung von dem mindestens einen Übertragungsteil gespannt wird.

8. Bedienvorrichtung gemäß Anspruch 3 und Anspruch 5, 6 oder 7, wobei das mindestens eine Übertragungsteil in der ersten Position des Bedienteils in einer ersten Anordnung am Bedienteil angeordnet ist und in der zweiten Position des Bedienteils in einer zweiten Anordnung am Bedienteil angeordnet ist, wobei die zweite Anordnung durch die Bedienbewegung, das Zusammenwirken des mindestens einen ersten und zweiten Kopplungselements, und die Schwenkbewegung herbeiführbar ist, und wobei die Bedienvorrichtung eine Federeinrichtung (45) aufweist, die bei Durchführung der Bedienbewegung gespannt wird, und die das mindestens eine Übertragungsteil im Falle des Entkoppelns des während der Übertragungsbewegung gekoppelten mindestens einen ersten und zweiten Kopplungselements in die erste Anordnung zurückstellt.

9. Bedienvorrichtung gemäß einem der vorherigen Ansprüche, wobei das mindestens eine Kopplungselement ein Krallenelement aufweist, durch welches bei Durchführung der Bedienbewegung das mindestens eine, als Vorsprungselement ausgeführte zweite Kopplungselement mitnehmbar ist und dadurch die Schwenkbewegung der Klappvorrichtung bewirkbar ist.

10. Bedienvorrichtung gemäß Anspruch 3, wobei in der zweiten Position das mindestens eine erste Kopplungselement und das mindestens eine zweite Kopplungselement gekoppelt sind und entkoppelt werden, wenn das Bedienteil von der zweiten Position in eine dritte Position bewegt wird, so dass die Klappvorrichtung der Bedienvorrichtung entnommen werden kann.

11. Bedienvorrichtung gemäß 3 und Anspruch 5 und einem der vorherigen Ansprüche, wobei das Bedienteil mindestens ein erstes Rastelement (43) aufweist und das mindestens eine Übertragungsteil (40) mindestens ein zweites Rastelement (44) aufweist, wobei das mindestens eine erste und zweite Rastelement das mindestens eine Übertragungsteil in mindestens einer Rastposition am Bedienteil verrasten können.

12. Bedienvorrichtung gemäß Anspruch 3 und 11, wobei das mindestens eine erste und zweite Rastelement das mindestens eine Übertragungsteil in einer Rastposition am Bedienteil verrasten können, wenn das Bedienteil in der zweiten Position und die Klappvorrichtung in der zweiten Schwenkposition angeordnet ist, in der die Klappvorrichtung aufgeklappt ist.

13. Bedienvorrichtung gemäß einem der vorherigen Ansprüche, die eine Beleuchtungseinrichtung (15; 25) aufweist, die zur Beleuchtung eines vorbestimmten Bereichs der Klappvorrichtung angeordnet ist, wenn diese in einer Beleuchtungsposition am Lagerteil gelagert ist.

14. Klappvorrichtung (1; 50), insbesondere Zählkammereinrichtung zum Zählen von mikroskopischen Partikeln, aufweisend
ein erstes Teil (2; 52) und ein zweites Teil (3; 52), die zur Durchführung einer Schwenkbewegung R um eine Schwenkachse relativ zueinander bewegbar angeordnet sind, und
mindestens ein zweites Kopplungselement (7; 57), das zur Wechselwirkung mit dem mindestens einen ersten Kopplungselement einer Bedienvorrichtung gemäß einem der Ansprüche 1 bis **13** ausgebildet ist,
wobei die Klappvorrichtung zur Lagerung am Lagerteil (11; 21) der Bedienvorrichtung (10; 20) ausgebildet ist,
wobei die Klappvorrichtung dazu ausgebildet ist, dass das mindestens eine zweite Kopplungselement mit dem mindestens einen ersten Kopplungselement der Bedienvorrichtung zusammenwirkt, wenn die Klappvorrichtung am Lagerteil gelagert ist, so dass durch diese Kopplung eine Bedienbewegung des Bedienteils der Bedienvorrichtung die Schwenkbewegung bewirkt.

15. Verfahren (100) zum Bedienen einer Klappvorrichtung gemäß Anspruch **14,** insbesondere Zählkammereinrichtung zum Zählen von mikroskopischen Partikeln, mittels der Bedienvorrichtung gemäß einem der Ansprüche 1 bis **13,** aufweisend die Schritte:
- Lagern der Klappvorrichtung am Lagerteil;
- Bewegen des Bedienteils in eine erste Position;
- Durchführen der Bedienbewegung von der ersten Position des Bedienteils zu einer zweiten Position des Bedienteils, während der durch das Zusammenwirken des mindestens einen ersten und zweiten Kopplungselements automatisch die Schwenkbewegung bewirkt wird;
- vorzugsweise: Bewegen des Bedienteils von der zweiten Position zu einer dritten Position, wodurch das mindestens eine erste und zweite Kopplungselement entkoppelt werden, und vorzugsweise: Entnehmen der Klappvorrichtung aus der Bedienvorrichtung in der dritten Position.
